# FASCICULE DE BREVET EUROPEEN

(11) **EP 4 640 496 B1**
(45) Date de publication et mention de la délivrance du brevet: **28.10.2026**
(21) Numéro de dépôt: 25165704.5
(22) Date de dépôt: 24.03.2025
(51) Int. Cl.: B60R 21/205

(54) **PATTE DE FIXATION À DOUBLE FONCTION, POUR UN DISPOSITIF DE PROTECTION À SAC GONFLABLE D'UN VÉHICULE**
DOPPELFUNKTIONS-BEFESTIGUNGSLASCHE FÜR EINE AIRBAG-SCHUTZVORRICHTUNG EINES FAHRZEUGS
DUAL FUNCTION BRACKET FOR AN AIRBAG PROTECTION DEVICE OF A VEHICLE

(30) Priorité: 25.04.2024 FR 2404283
(43) Date de publication de la demande: 29.10.2025
(73) Titulaire: Stellantis Auto SAS, 78300 Poissy (FR)
(72) Inventeur: COMBET, Fabrice, 70400 HERICOURT (FR); MARTIN, Pascal, 25420 BART (FR); MORGEN, Marc, 68700 ASPACH MICHELBACH (FR)
(74) Mandataire: BCIP

(56) Documents cités:
- EP-A2- 1 997 691
- DE-U1- 20 310 345
- JP-A- H1 191 479
- KR-B1- 100 503 246
- US-A1- 2010 230 935

## Description

### Domaine technique de l'invention

L'invention concerne les véhicules comprenant une planche de bord supportée par une traverse et logeant un dispositif de protection à sac gonflable comprenant un boîtier supporté par une patte de support, et plus précisément la patte de fixation qui est solidarisée fixement à une telle traverse et à laquelle est solidarisée fixement une telle patte de support.

### Etat de la technique

Certains véhicules, généralement de type automobile, comprennent, d'une part, une planche de bord supportée par une traverse et logeant un dispositif de protection à sac gonflable (ou « airbag ») comprenant un boîtier supporté par une patte de support, et, d'autre part, une patte de fixation comportant une première extrémité solidarisée fixement à cette traverse et une seconde extrémité à laquelle est solidarisée fixement cette patte de support.

La patte de fixation est actuellement agencée de manière à encaisser les efforts qui lui sont transmis par la patte de support lorsque le mécanisme (généralement pyrotechnique), logé dans le boîtier, déclenche le gonflement du sac gonflable consécutivement à la détection d'un choc subi par le véhicule. Elle présente donc une importante raideur destinée à permettre un déploiement prédéfini correct du sac gonflable au travers d'un passage défini dans la planche de bord puis au-dessus de cette dernière.

Lorsque la planche de bord subit un choc dans la zone située au-dessus du dispositif de protection à sac gonflable, par exemple du fait d'une collision de la tête d'une personne ayant traversé le pare-brise, cette zone se déforme en s'enfonçant et vient heurter le boîtier du dispositif de protection à sac gonflable. La patte de support étant solidarisée fixement à la seconde extrémité de la patte de fixation dans une position prédéfinie, elle s'oppose quasiment intégralement à un déplacement du boîtier, et donc l'enfoncement par la tête de la zone heurtée de la planche de bord se retrouve quasiment instantanément et quasiment totalement interrompu. Or, une telle interruption constitue ce que l'homme de l'art appelle un « point dur » qui peut occasionner des dommages corporels importants à la personne entrée en collision avec le pare-brise puis la planche de bord. L'état de la technique le plus proche JPH1191479A divulgue un véhicule comprenant une planche de bord supportée par une traverse et logeant un dispositif de protection à sac gonflable comprenant un boîtier supporté par une patte de support, dont le véhicule comprend en outre une patte de fixation comprenant une partie principale comportant une première extrémité solidarisée fixement à ladite traverse et une seconde extrémité couplée à ladite patte de support.

L'invention a donc notamment pour but d'améliorer la situation.

### Présentation de l'invention

Elle propose notamment à cet effet une patte de fixation, d'une part, destinée à être associée à un dispositif de protection à sac gonflable comprenant un boîtier supporté par une patte de support et propre à être logé dans une planche de bord d'un véhicule supportée par une traverse, et, d'autre part, comprenant une partie principale comportant une première extrémité propre à être solidarisée fixement à cette traverse et une seconde extrémité à laquelle est propre à être couplée cette patte de support.

Cette patte de fixation se caractérise par le fait qu'elle comprend aussi une partie auxiliaire à laquelle est propre à être solidarisée fixement la patte de support et montée à rotation sur la seconde extrémité de manière à permettre son entraînement en rotation lorsque la patte de support est inclinée par un déplacement du boîtier provoqué par un choc subi par la planche de bord.

Ainsi, l'enfoncement de la zone heurtée de la planche de bord n'est plus interrompu par le boîtier, et ce dernier, par son déplacement permis par la rotation de la partie auxiliaire (et donc de la patte de support) participe avantageusement à l'absorption d'une partie de l'énergie du choc, ce qui permet de limiter les dommages corporels de la personne entrée en collision avec le pare-brise du véhicule puis la planche de bord.

La patte de fixation selon l'invention peut comporter d'autres caractéristiques qui peuvent être prises séparément ou en combinaison, et notamment :
- la partie auxiliaire peut être montée à rotation sur la seconde extrémité de la partie principale selon un angle prédéfini de manière à être initialement placée dans un plan parallèle à une direction perpendiculaire à une paroi de fond du boîtier et faisant un angle aigu avec une normale à une face supérieure de la planche de bord ;
- la partie auxiliaire peut comprendre au moins un trou traversant propre à être traversé par une tige d'une vis de fixation assurant la solidarisation fixe de la patte de support à la partie auxiliaire ;
- la partie principale et la partie auxiliaire peuvent faire partie d'une pièce monobloc ;
- en présence de la dernière option, la pièce monobloc peut être réalisée dans un métal rigide ;
- également en présence de la dernière option, la pièce monobloc peut comprendre, d'une part, une paroi supérieure comportant la seconde extrémité et prolongée par la partie auxiliaire, et, d'autre part, deux parois latérales repliées vers le bas depuis deux bords opposés de la paroi supérieure, afin de présenter une section transversale en forme générale de U.

L'invention propose également un véhicule, éventuellement de type automobile, et comprenant, d'une part, une planche de bord supportée par une traverse et logeant un dispositif de protection à sac gonflable comprenant un boîtier supporté par une patte de support, et, d'autre part, une patte de fixation du type de celle présentée ci-avant, solidarisée fixement à cette traverse et à laquelle est solidarisée fixement la patte de support.

Par exemple, le boîtier peut être installé dans la planche de bord en ayant une paroi de fond ayant une normale parallèle à la patte de support et faisant un angle aigu avec une normale à une face supérieure de la planche de bord.

### Brève description des figures

D'autres caractéristiques et avantages de l'invention apparaîtront à l'examen de la description détaillée ci-après, et des dessins annexés (obtenus en CAO/DAO (« Conception Assistée par Ordinateur/Dessin Assisté par Ordinateur »)), sur lesquels :
[Fig. 1] illustre schématiquement, dans une vue en perspective du côté avant, une partie d'un exemple de planche de bord de véhicule comportant un dispositif de protection à sac gonflable et un exemple de réalisation d'une patte de fixation selon l'invention solidarisée à une traverse et à laquelle est solidarisée fixement le dispositif de protection à sac gonflable,
[Fig. 2] illustre schématiquement, dans une vue en perspective du côté avant, les traverse et patte de fixation de la figure 1, avant la solidarisation de la patte de support du dispositif de protection à sac gonflable,
[Fig. 3] illustre schématiquement, dans une vue en coupe dans un plan longitudinal et vertical, la planche de bord de la figure 1 avant une collision, et
[Fig. 4] illustre schématiquement, dans une vue en coupe dans un plan longitudinal et vertical, la planche de bord de la figure 1 pendant une collision avec une tête dans la zone placée au-dessus du dispositif de protection à sac gonflable.

### Description détaillée de l'invention

L'invention a notamment pour but de proposer une patte de fixation PF destinée à être solidarisée fixement à une traverse TP d'une planche de bord PB d'un véhicule et à laquelle est propre à être couplée une patte de support PS d'un dispositif de protection à sac gonflable DP logé dans cette planche de bord PB, et assurant deux fonctions.

Dans ce qui suit, on considère, à titre d'exemple non limitatif, que le véhicule V est de type automobile. Il s'agit par exemple d'une voiture. Mais l'invention n'est pas limitée à ce type de véhicule. Elle concerne en effet tout véhicule (terrestre, maritime (ou fluvial), ou aérien) comprenant une planche de bord logeant un dispositif de protection à sac gonflable (ou airbag) comprenant une patte de fixation devant être solidarisée à une patte de fixation.

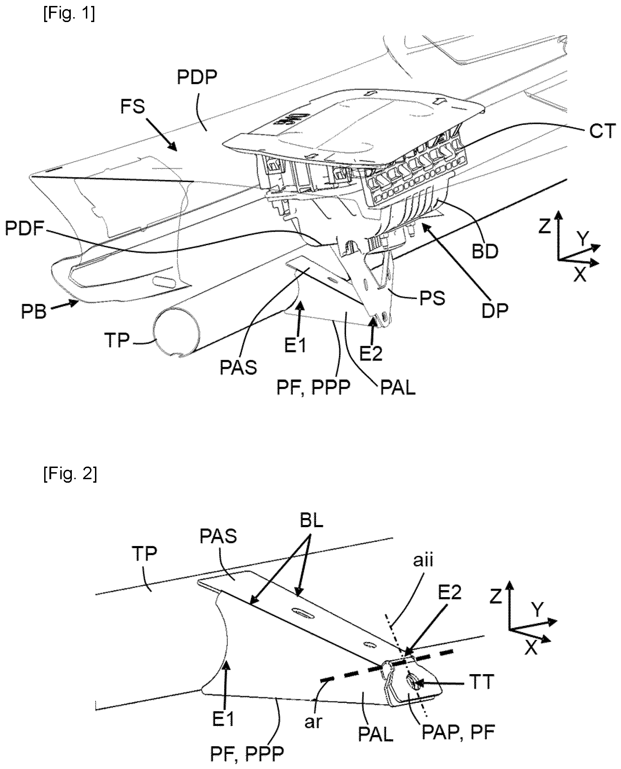

Sur les figures 1 à 4 la direction X est destinée à être parallèle à la direction longitudinale du véhicule V, laquelle est sensiblement parallèle aux côtés latéraux (ou longitudinaux) comportant les portières latérales, la direction Y est destinée à être parallèle à la direction transversale du véhicule V, laquelle est perpendiculaire à la direction longitudinale X, et la direction Z est destinée à être parallèle à la direction verticale du véhicule V, laquelle est perpendiculaire aux directions longitudinale X et transversale Y.

On a schématiquement illustré au moins partiellement sur les figures 1, 3 et 4 une partie d'un exemple de planche de bord PB destinée à équiper un véhicule (ici une voiture) et comportant un dispositif de protection à sac gonflable DP et un exemple de réalisation d'une patte de fixation PF selon l'invention.

La planche de bord PB est supportée et fixée à une traverse TP et loge le dispositif de protection à sac gonflable DP dans un espace interne qui débouche au niveau d'une ouverture supérieure masquée, par exemple par une zone de sa peau PDP délimitée par une zone d'affaiblissement périphérique, et par laquelle son sac gonflable doit se déployer d'une façon prédéfinie.

Ce dispositif de protection à sac gonflable DP comprend un boîtier BD logeant au moins le sac gonflable et le mécanisme (par exemple pyrotechnique) chargé de déclencher le gonflement du sac gonflable consécutivement à la détection d'un choc subi par le véhicule et présentant certaines caractéristiques prédéfinies. De plus, ce boîtier BD a une paroi de fond PDF à laquelle est solidarisée fixement une patte de support PS destinée à supporter ce boîtier BD. On notera que cette patte de support PS s'étend dans un plan qui est parallèle à la normale de cette paroi de fond PDF. Par ailleurs, cette patte de support PS comprend une extrémité inférieure qui est solidarisée fixement à la patte de fixation PF selon l'invention.

On notera également, comme illustré non limitativement sur les figures 1, 3 et 4, qu'une pièce CT, fréquemment appelée « canal de tir » et généralement réalisée dans une matière plastique déformable, peut être couplée à la partie supérieure du boîtier BD. Ce canal de tir CT est généralement solidarisé fixement à la peau PDP (du côté de sa face inférieure (ou interne) opposée à sa face supérieure (ou externe) FS), et est destiné à guider le début du déploiement du sac gonflable.

Comme illustré au moins partiellement sur les figures 1 à 4 une patte de fixation PF, selon l'invention, comprend une partie principale PPP et une partie auxiliaire PAP.

La partie principale PPP comprend des première E1 et seconde E2 extrémités opposées. La première extrémité E1 est propre à être solidarisée fixement à la traverse TP. De préférence, et comme illustré, cette partie principale PPP est rectiligne.

La partie auxiliaire PAP est montée à rotation sur la seconde extrémité E2 de la partie principale PPP, et l'extrémité inférieure de la patte de support PS est destinée à être solidarisée fixement à elle (PAP). Ainsi, la patte de support PS est couplée à la seconde extrémité E2. Ce montage à rotation permet l'entraînement en rotation de la partie auxiliaire PAP lorsque la patte de support PS est inclinée par un déplacement du boîtier BD qui est provoqué par un choc subi par la planche de bord PB.

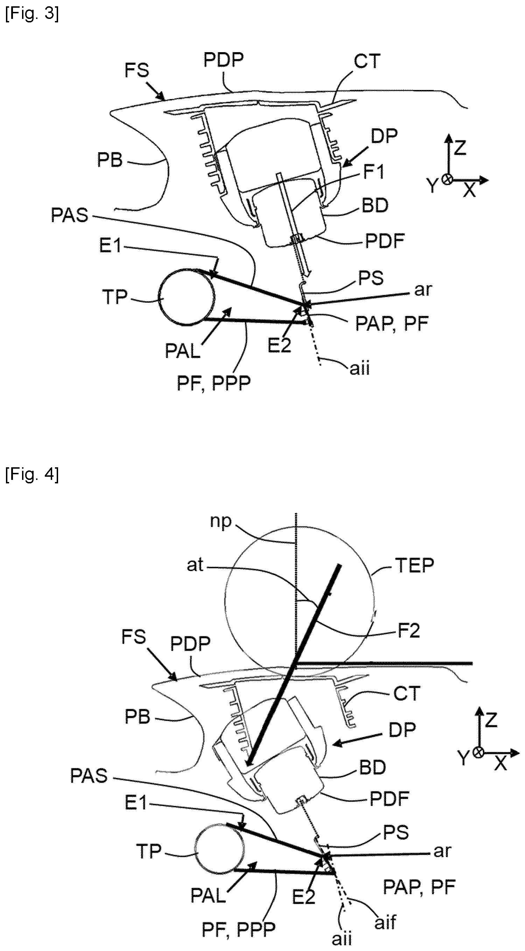

En d'autres termes, si la patte de support PS présente initialement (c'est-à-dire avant un choc) une inclinaison définie par un axe aii faisant un angle initial avec la direction verticale Z (voir figure 3), alors en cas de choc (par exemple du fait d'une collision avec la tête TEP d'une personne ayant traversé le pare-brise du véhicule) provoquant l'enfoncement de la zone heurtée de la planche de bord PB jusqu'au boîtier BD, ce dernier (BD) peut désormais se déplacer car la patte de support PS peut modifier son inclinaison grâce à la capacité de rotation de la partie auxiliaire PAP à laquelle elle est solidarisée fixement. Cette nouvelle inclinaison est alors définie par un axe aif faisant un angle final avec la direction verticale Z différent de son angle initial, comme illustré non limitativement sur la figure 4. L'enfoncement par la tête de la zone heurtée de la planche de bord PB n'étant plus interrompu par le boîtier BD, ce dernier (BD) ne constitue donc plus un point dur, mais participe avantageusement à l'absorption d'une partie de l'énergie du choc lors de son déplacement, ce qui permet de limiter les dommages corporels de la personne entrée en collision avec le pare-brise puis la planche de bord PB.

On notera que sur la figure 4, illustrant une situation de choc d'une tête TEP sur la zone située au-dessus du dispositif de protection à sac gonflable DP, l'angle at matérialise l'écart angulaire entre la normale np de la face supérieure FS de la peau PDP et la direction de la tête TEP lorsqu'elle commence à enfoncer la peau PDP (matérialisée par la flèche F2). Ici, cet angle est sensiblement égal à 25°. On notera également que sur la figure 4 le canal de tir CT est découplé du boîtier BD, mais dans la réalité il demeure couplé à ce dernier (BD) pendant sa rotation, et fait alors l'objet d'une déformation.

Par exemple, et comme illustré non limitativement sur les figures 1 à 4, le boîtier BD peut être installé dans la planche de bord PB en ayant la normale à sa paroi de fond PDF parallèle à la patte de support PS et faisant initialement un angle aigu avec la normale np à la face supérieure FS de la peau PDP de la planche de bord PB. Le boîtier BD est donc incliné par rapport à cette normale np. Dans ce cas, la partie auxiliaire PAP peut être montée à rotation sur la seconde extrémité E2 selon un angle prédéfini de manière à être initialement placée dans un plan qui est parallèle à une direction perpendiculaire à la paroi de fond PDF du boîtier BD et faisant un angle aigu avec la normale np à la face supérieure FS de la peau PDP de la planche de bord PB.

Cet agencement est particulièrement avantageux car il permet à la patte de fixation PF d'encaisser les efforts qui lui sont transmis par la patte de support PS (flèche F1 de la figure 3) lorsque le mécanisme, logé dans le boîtier BD, déclenche le gonflement du sac gonflable consécutivement à la détection d'un choc subi par le véhicule et présentant certaines caractéristiques prédéfinies. Ainsi, la patte de fixation PF assure une double fonction, à savoir l'encaissement des efforts lors du gonflage et son entraînement en rotation lors d'un choc pour rendre possible l'absorption d'une partie de l'énergie d'un choc.

On notera que l'axe initial aii est ici parallèle à la flèche F1, afin de permettre un encaissement optimal des efforts transmis.

Egalement par exemple, et comme illustré non limitativement sur la figure 2, la partie auxiliaire PAP peut comprendre au moins un trou traversant TT qui est propre à être traversé par la tige d'une vis (ou d'un boulon) de fixation assurant la solidarisation fixe de la patte de support PS à cette partie auxiliaire PAP.

Egalement par exemple, et comme illustré non limitativement sur les figures 2 à 4, la partie principale PPP et la partie auxiliaire PAP peuvent faire partie d'une pièce monobloc. Mais cela n'est pas une obligation. En effet, la partie auxiliaire PAP pourrait être rapportée et montée à rotation sur la seconde extrémité E2 de la partie principale PPP.

Dans le cas d'une pièce monobloc, cette dernière peut, par exemple, être réalisée dans un métal rigide afin de présenter une raideur lui permettant d'encaisser les efforts transmis par la patte de support PS lors d'un gonflage, sans se déformer.

Egalement par exemple, et comme illustré non limitativement sur les figures 1 à 4, la pièce monobloc peut comprendre une paroi supérieure PAS et deux parois latérales PAL. Dans ce cas, la paroi supérieure PAS comporte la seconde extrémité E2 et est prolongée par la partie auxiliaire PAP, et les deux parois latérales PAL sont repliées vers le bas depuis deux bords BL opposés de la paroi supérieure PAS, afin de présenter une section transversale en forme générale de U (inversé). Un tel agencement peut être obtenu par usinage et pliages ou emboutissages (chaudronnerie). La possibilité d'entraîner en rotation la partie auxiliaire PAP par rapport à la seconde extrémité E2 peut résulter d'une réduction locale d'épaisseur et/ou de largeur à l'interface avec cette dernière (E2).

Mais, la pièce monobloc pourrait aussi être réalisée par moulage d'une matière métallique, et avoir éventuellement une partie principale PPP pleine et non pas à section transversale en U.

## Revendications

1. Véhicule comprenant une planche de bord (PB) supportée par une traverse (TP) et logeant un dispositif de protection à sac gonflable (DP) comprenant un boîtier (BD) supporté par une patte de support (PS), **caractérisé en ce qu'**il comprend en outre une patte de fixation (PF) comprenant une partie principale (PPP) comportant une première extrémité (E1) solidarisée fixement à ladite traverse (TP) et une seconde extrémité (E2) couplée à ladite patte de support (PS), la patte de fixation (PF) comprenant en outre une partie auxiliaire (PAP) solidarisée fixement à ladite patte de support (PS) et montée à rotation sur ladite seconde extrémité (E2) de manière à permettre son entraînement en rotation lorsque ladite patte de support (PS) est inclinée par un déplacement dudit boîtier (BD) provoqué par un choc subi par ladite planche de bord (PB), la patte de fixation (PF) étant solidarisée fixement à ladite traverse (TP) et solidarisée fixement à ladite patte de support (PS).

2. Véhicule selon la revendication 1, **caractérisé en ce que** ladite partie auxiliaire (PAP) est montée à rotation sur ladite seconde extrémité (E2) selon un angle prédéfini de manière à être initialement placée dans un plan parallèle à une direction perpendiculaire à une paroi de fond (PDF) dudit boîtier (BD) et faisant un angle aigu avec une normale à une face supérieure (FS) de ladite planche de bord (PB).

3. Véhicule selon la revendication 1 ou 2, **caractérisé en ce que** ladite partie auxiliaire (PAP) comprend au moins un trou traversant (TT) traversé par une tige d'une vis de fixation assurant la solidarisation fixe de ladite patte de support (PS) à ladite partie auxiliaire (PAP).

4. Véhicule selon l'une des revendications 1 à 3, **caractérisé en ce que** ladite partie principale (PPP) et ladite partie auxiliaire (PAP) font partie d'une pièce monobloc.

5. Véhicule selon la revendication 4, **caractérisé en ce que** ladite pièce monobloc est réalisée dans un métal rigide.

6. Véhicule selon la revendication 4 ou 5, **caractérisé en ce que** ladite pièce monobloc comprend i) une paroi supérieure (PAS) comportant ladite seconde extrémité (E2) et prolongée par ladite partie auxiliaire (PAP), et ii) deux parois latérales (PAL) repliées vers le bas depuis deux bords (BL) opposés de ladite paroi supérieure (PAS), afin de présenter une section transversale en forme générale de U.

7. Véhicule selon l'une des revendications précédentes, **caractérisé en ce que** ledit boîtier (BD) est installé dans ladite planche de bord (PB) en ayant une paroi de fond (PDF) ayant une normale parallèle à ladite patte de support (PS) et faisant un angle aigu avec une normale à une face supérieure (FS) de ladite planche de bord (PB).

8. Véhicule selon l'une des revendications précédentes, **caractérisé en ce qu'**il est de type automobile.

## Patentansprüche

1. Fahrzeug mit einem Armaturenbrett (PB), das von einem Querträger (TP) getragen wird und eine Airbag-Schutzvorrichtung (DP) aufnimmt, die ein Gehäuse (BD) umfasst, das von einem Stützfuß (PS) getragen wird, **dadurch gekennzeichnet, dass** es ferner einen Befestigungsfuß (PF) umfasst, der einen Hauptabschnitt (PPP) umfasst, der ein erstes Ende (E1), das fest mit dem Querträger (TP) verbunden ist, und ein zweites Ende (E2), das mit dem Stützfuß (PS) verbunden ist, wobei der Befestigungsfuß (PF) ferner einen Hilfsabschnitt (PAP) umfasst, der fest verbunden ist Die Stützlasche (PS) ist drehbar an dem zweiten Ende (E2) gelagert, sodass sie drehbar antreibbar ist, wenn die Stützlasche (PS) durch eine Bewegung des Gehäuses (BD), die durch einen Aufprall des Armaturenbretts (PB) verursacht wird, geneigt wird, wobei die Befestigungslasche (PF) fest mit der Traverse (TP) und fest mit der Stützlasche (PS) verbunden ist.

2. Fahrzeug nach Anspruch 1, **dadurch gekennzeichnet, dass** der Hilfsabschnitt (PAP) an dem zweiten Ende (E2) unter einem vorbestimmten Winkel drehbar angebracht ist, sodass er anfänglich in einer Ebene parallel zu einer Richtung senkrecht zu einer Bodenwand (PDF) des Gehäuses (BD) angeordnet ist und einen spitzen Winkel mit einer Normalen zu einer Oberseite (FS) des Armaturenbretts (PB) bildet.

3. Fahrzeug nach Anspruch 1 oder 2, **dadurch gekennzeichnet, dass** der Hilfsteil (PAP) mindestens ein Durchgangsloch (TT) umfasst, das von einem Schaft einer Befestigungsschraube durchquert wird, die die feste Verbindung des Stützlappens (PS) mit dem Hilfsteil (PAP) sicherstellt.

4. Fahrzeug nach einem der Ansprüche 1 bis 3, **dadurch gekennzeichnet, dass** der Hauptteil (PPP) und der Hilfsteil (PAP) Teil eines einstückigen Teils sind.

5. Fahrzeug nach Anspruch 4, **dadurch gekennzeichnet, dass** das einstückige Teil aus einem steifen Metall hergestellt ist.

6. Fahrzeug nach Anspruch 4 oder 5, **dadurch gekennzeichnet, dass** das einstückige Teil i) eine obere Wand (PAS) mit dem zweiten Ende (E2), die durch den Hilfsteil (PAP) verlängert ist, und ii) zwei Seitenwände (PAL) umfasst, die von zwei gegenüberliegenden Rändern (BL) der oberen Wand (PAS) nach unten gebogen sind, um einen im Allgemeinen U-förmigen Querschnitt zu haben.

7. Fahrzeug nach einem der vorhergehenden Ansprüche, **dadurch gekennzeichnet, dass** das Gehäuse (BD) in dem Armaturenbrett (PB) mit einer Bodenwand (PDF) installiert ist, die eine zu dem Stützfuß (PS) parallele Senkrechte hat und einen spitzen Winkel mit einer Senkrechten zu einer Oberseite (FS) des Armaturenbretts (PB) bildet.

8. Fahrzeug nach einem der vorhergehenden Ansprüche, **dadurch gekennzeichnet, dass** es ein Kraftfahrzeug ist

## Claims

1. Vehicle comprising a dashboard (PB) supported by a cross-member (TP) and housing an inflatable bag protection device (DP) comprising a housing (BD) supported by a support lug (PS), **characterised in that** it further comprises a fixing lug (PF) comprising a main part (PPP) comprising a first end (E1) fixedly attached to said cross-member (TP) and a second end (E2) coupled to said support lug (PS), the fixing lug (PF) further comprising an auxiliary part (PAP) fixedly attached to said support lug (PS) and mounted to rotate on said second end (E2) so as to allow it to be driven in rotation when said support lug (PS) is inclined by a movement of said housing (BD) caused by an impact suffered by said dashboard (PB) fastening (PF) being fixedly attached to said cross-member (TP) and fixedly attached to said support lug (PS).

2. The vehicle according to claim 1, wherein said auxiliary part is rotatably mounted on said second end at a predefined angle so as to be initially placed in a drawing parallel to a management perpendicular to a bottom wall of said housing and forming an acute angle with a perpendicular to an upper face of said dashboard.

3. Vehicle according to Claim 1 or 2, **characterised in that** said auxiliary part (PAP) comprises at least one through hole (TT) through which a rod of a fixing screw passes, ensuring the fixed attachment of said support lug (PS) to said auxiliary part (PAP).

4. Vehicle according to one of Claims 1 to 3, **characterised in that** said main part (PPP) and said auxiliary part (PAP) form part of a one-piece component.

5. Vehicle according to claim 4, wherein said one-piece component is realised from a rigid metal.

6. Vehicle according to Claim 4 or 5, **characterised in that** said one-piece component comprises i) an upper wall (PAS) comprising said second end (E2) and extended by said auxiliary part (PAP), and ii) two lateral walls (PAL) folded downwards from two opposite edges (SHIPMENT ADVICE) of said upper wall (PAS), in order to have a generally U-shaped cross section.

7. The vehicle according to claim 7, wherein said housing is installed in said dashboard by having a bottom wall having a previous perpendicular to said support lug and forming an acute angle with a perpendicular to an upper face of said dashboard.

8. Vehicle according to one of the previous claims, **characterised in that** it is of the automobile type
